# EUROPEAN PATENT APPLICATION

(11) **EP 4 750 017 A1**
(43) Date of publication of application: **27.05.2026**
(21) Application number: 24215555.4
(22) Date of filing: 26.11.2024
(51) Int. Cl.: H04L 41/122, H04L 41/22, H04L 41/40, H04L 43/0876, H04L 43/091

(54) **METHOD FOR AUTOMATED VISUALIZING A LOGICAL NETWORK TOPOLOGY OF AN IMPLEMENTED 5G MOBILE NETWORK**

(71) Applicant: Deutsche Telekom AG, 53113 Bonn (DE)
(72) Inventor: KABBOUD, Ahmad, 53175 Bonn (DE); IBRAHIM, Mohamed, 53121 Bonn (DE)
(74) Representative: Blumbach · Zinngrebe Patentanwälte PartG mbB

(57) **Abstract**

The present invention relates to a method in particular for automated visualizing a logical network topology of an implemented 5G mobile network (10), wherein at least one network repository function, NRF, (40, 50, 80) and a plurality of network functions (41.1-41n; 51.1-51.n; 81.1-81.k) are implemented within the 5G mobile network (10).

A central visualization application (95) requests all network function information of a plurality of network functions, NFs, (41.1-41n; 51.1-51.n; 81.1-81.k) from at least one NF repository function, NRF, (40, 50, 80) which collects these NF information from each of the plurality of NFs. (41.1-41n; 51.1-51.n; 81.1-81.k) The plurality of NFs (41.1-41n; 51.1-51.n; 81.1-81.k) performs or supports at least one network service or network application implemented in a 5G standardized mobile network (10). The visualization application (95) is configured to retrieve at least some of the NF information from the at least one NRF (40, 50, 80) and to generate in dependence of the received NF information a visual representation (110) of a logical network topology of the 5G mobile network (10), which is defined by the respective network functions.

## Description

### Technical Field of the Invention

The present invention relates to a method in particular for automated visualizing a logical network topology of an implemented 5G mobile network, wherein at least one Network Function (NF) Repository Function, NRF, also known as a network repository function, and a plurality of network functions are implemented within the 5G mobile network.

### Background of the Invention

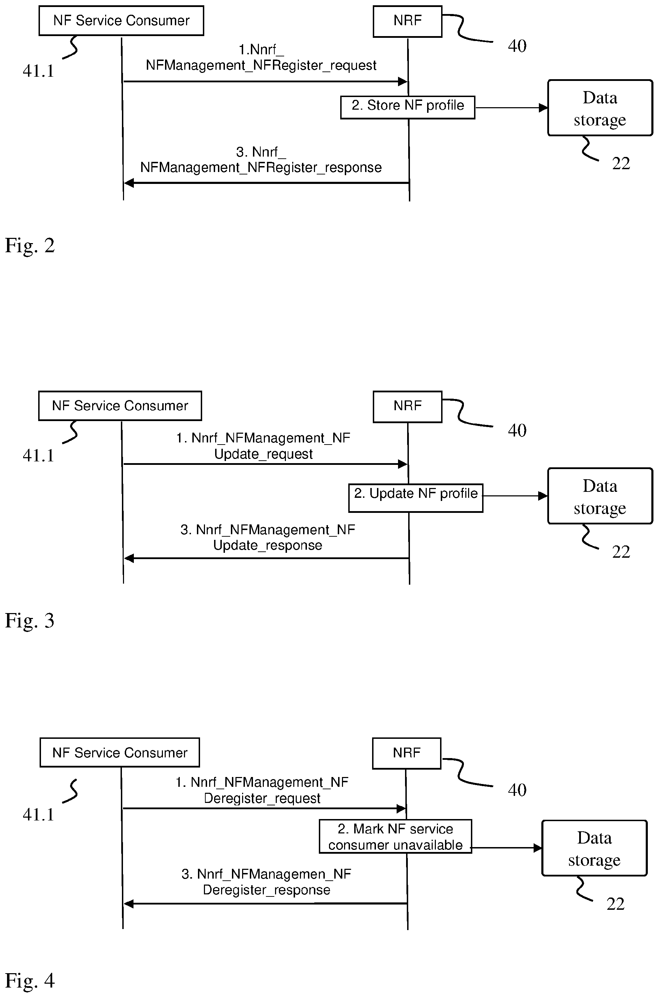

A complete fifth generation, 5G, network architecture, such as the 5G Standalone, 5G SA, network architecture, is known, which is specified by the 3rd Generation Partnership Project, 3GPP for example in 3GPP TS 23.501 ("System Architecture for the 5G System; Stage 2) and in 3GPP TS 23.502 (Procedures for the 5G System; Stage 2). The 5G network, which inter alia includes a 5G core network, is based on a 5G Service Based Architecture, 5G SBA, which is defined by 3GPP. The 5G SBA utilizes a set of predefined network functions, NFs, and at least one NF repository function, NRF, to provide control plane and user plane functionalities. The NFs, also called NF instances or NF elements, can be interconnected by using web-based Application Programming Interfaces, APIs, with each NF authorized to access the services of other NFs (see for example: Openapi: https://forge.3gpp.org/rep/all/5G_APIs/-/raw/REL-19/TS29510_Nnrf_NFManagement.yaml). In order for a requested NF service to be discovered via the NRF, the NF instance need to be registered in the NRF. This is done for example by sending a Nnrf_NFManagement_NFRegister containing an NF profile of the NF instance from the NF instance to the NRF which stores the NF profile in a data storage. The NF profile contains multiple information elements related to the NF instance, such as an NF instance ID and supported NF services. The process of registration an NF instance 41.1 in a NRF 40 and the exchanged messages are shown in figure 2 and specified for example in the Technical Specification 3GPP TS 29.510 version 15.1.0 Release 15, "5G System; Network function repository services; Stage 3"). It is noted that an NF can operate as a consumer sending a request as seen in Figure 2 or as a producer proving a service.

In order to monitor and analyze such an implemented 5G network based on the 5G Service Based Architecture it is necessary to get access to and prepare all information on the NFs implemented in the 5G SBA network. However, at present, the NRF of a 5G SBA network only supports service discovery by receiving discovery requests from NF instances and providing details on which NF instances support specific services.

Therefore, it is an object of the present invention to provide a method in particular for automated visualizing a logical network topology of an implemented public land mobile network, PLMN, which allows getting access to and preparing all information on the NFs implemented in a public land mobile network, PLMN, in a cost-effective way with reduced data transfer. In particular, the method enables in a very efficient way the detection and/or localization of failures, such as overloading of network elements or wrong traffic distribution, within the implemented PLMN.

### Summary of the Invention

According to a preferred aspect of the invention a central entity requests all network function information of a plurality of network functions, NFs, from at least one NF repository function, NRF, which collects these NF information from each of the plurality of NFs. The plurality of NFs performs or supports at least one network service or network application implemented in a 5G standardized mobile network, such as a 5G Public Land Mobile Network, PLMN. The central entity is configured to retrieve at least some of the NF information from the NRF and to generate in dependence of the received NF information a visual representation of a logical network topology of the 5G mobile network, which is defined by the respective network functions . Preferably, the central entity is a visualization application which is with respect to an NF and a NRF an independent software instance, which is configured to communicate with the NRF.

According to a further preferred aspect the visualization application is configured to inform for example the owner or operator of an NF registered on the at least one NRF and/or an orchestrator of the PLNM about an anomaly of the respective NF, for example about an undesired utilization of a network resource required by that NF.

The above-mentioned object is solved by the steps of claim 1. Therefore, a method in particular for automated visualizing a logical network topology of an implemented fifth Generation mobile network, is provided, wherein
at least one Network Function Repository Function, NRF, and a first plurality of network functions are implemented within the 5G mobile network, wherein the first plurality of network functions is configured to support a first predefined network service of the implemented 5G mobile network, wherein to each of the first plurality of network functions a network function profile is assigned, wherein the network function profile of each of the first plurality of network functions includes multiple network function related information elements, wherein a visualization application is implemented, wherein the visualization application and the at least one NRF are configured to communicate with each other. The method preferably comprises the steps:
a) registering each of the first plurality of network functions at the at least one NRF by transmitting a register request message including the network function profile from each network function of the first plurality of network function to the at least one NRF and storing the received network function profile in a data storage;
b) transmitting a request message from the visualization application to the at least one NRF for obtaining the network function profile of each of the first plurality of network functions stored in the data storage;
c) transmitting in response to the request message the stored network function profiles from the at least one NRF to the visualization application;
d) generating, by the visualization application, in dependence of the multiple network function related information elements included in the network function profile of each of the first plurality of network functions a first visual representation of the first plurality of network functions; and
e) providing by the visualization application the first visual representation generated at step d) for outputting the visual representation on a display.

A preferred task of a NRF is to maintain the NF profile of all registered or available NF instances and their supported services.

The display may be part of an external computing device or system which can be connected, for example, via an IP based network such as the Internet to the visualization application.

The data storage is preferably implemented as a cloud-based database.

It is to be understood that the at least one NRF knows the address, e.g. the Uniform resource locator, URL, of the registered NFs and the visualization application, each NF knows the address, e.g. the Uniform resource locator, of the at least one NRF, and the visualization application knows the address, e.g. the Uniform resource locator, of the at least one NRF.

Preferred embodiments are set forth in the dependent claims.

Preferably, the 5G mobile network is a standardized Public Land Mobile Network, PLMN according to a fifth generation, 5G, standard defined by the third generation Partnership project, 3GPP. In particular, the 5G mobile network is a 5G Stand Alone, SA, network, which utilizes a standardized 5G Service Based Architecture, 5G SBA.

Preferably, the visualization application and the at least one NRF each implement a HTTP-based application programming interface, API, protocol to communicate with each other.

In order to keep the first visualization representation up to date of any changes regarding each of the first plurality of NFs, the method preferably comprises the steps: if at least one of the network function related information elements of a network function profile of any one of the first plurality of network functions is changed, then f1) transmitting by that network function an update request message including the changed network function profile with the at least one changed network function related information element to the at least one NRF and updating the respective network function profile currently stored in the data storage in dependence of the changed network function profile;
g1) transmitting the respective updated network function profile from the at least one NRF to the visualization application; and
h1) updating, by the visualization application, the first visual representation generated in step d) in dependence of the received updated network function profile; and
repeating steps f1) to h1) whenever at least one of the network function related information elements of a network function profile of any one of the first plurality of network functions is changed.

The process of updating the first visualization representation can be controlled by the visualization application, which can subscribe at the NRF at least one event which defines a change of an NF related information element included in an NF profile. In this case, the method preferably comprises the step:
step g1) comprises the step of transmitting the respective updated network function profile from the at least one NRF to the visualization application only then, if the at least one changed network function related information element belongs to a predefined changing list of at least one network function related information element, which is known to the at least one NRF.

Preferably, the changing list is defined by an operator and transmitted from an operator's computing system to the visualization application and from the visualization application to the at least one NRF.

Preferably, the network function profile of each of the first plurality of network functions may include as network function related information elements the type of the respective network function, an identifier assigned to the 5G mobile network, and/or the status of the respective network function and/or a uniform resource identifier, URI, of the respective network function, which includes the location of a data center, where the respective network function is implemented, and/or at least one supported service-based interface.

It is to be noted that, preferably according to 3GPP, each of the first plurality of network functions (NF) supports at least one predefined service-based interface depending on the type of the respective network function. A service-based interface of an NF is configured to communicate with a corresponding service-based interface of another network function.

Preferably, step d) comprises the following steps:
creating for each of the first plurality of network function a graphical element, wherein at least one of the network function related information elements included in the network function profile of each of the first plurality of network functions can be depicted within the graphical element of the respective network function, depicting each of the created graphical element within the first visual representation, and connecting via graphical links those graphical elements which represent network functions supporting the same service-based interface.

The information of which service-based interface is supported by a respective NF, in particular of each of the first plurality of network functions (NF), is known to the visualization application. To get this information, the network function profile of each of the first plurality of network functions may include as a network function related information element the at least one service-based interface supported by the respective NF. Alternatively, the information of which service-based interface is supported by a respective NF can be provided to the visualization application during an initialization phase, e.g. by transmitting this information by an orchestrator via a computing device to the visualization application.

In order to provide a security measurement, the network function profile of each of the first plurality of network functions preferably includes as further network function related information elements at least one network resource required for the respective network function, a utilization value of the at least one network resource and/or a load.

The method preferably comprises the steps:
assigning to at least one network resource a pre-defined utilization threshold and/or to the load a predefined load threshold,
providing each of the pre-defined utilization threshold an/or the load threshold for the visualization application,
checking, by the visualization application, each received network function profile to determine whether the utilization value of at least one network resource included in the respective the network function profile exceeds the respective pre-defined utilization threshold and/or checking, by the visualization application, each received network function profile to determine to determine whether the load value exceeds the predetermined load threshold, and if yes
notifying, by the visualization application , a predetermined entity thereof.

Alternatively, the method preferably comprises the steps:
assigning to at least one network resource a pre-defined utilization threshold and/or to the load a pre-defined load threshold,
providing each of the pre-defined utilization threshold and/or the load threshold for the visualization application,
transmitting the pre-defined utilization threshold of the at least one network resource and/or the load threshold from the visualization application to the at least one NRF,
transmitting the pre-defined utilization threshold of the at least one network resource and/or the load threshold to respective ones of the first plurality of network functions,
checking, by each of the first plurality of network functions the current network resource utilization of the at least one network resource required by the respective network function to determine whether the utilization value of the at least one network resource required by the respective network function exceeds the respective pre-defined network function threshold and/or checking, by each of the first plurality of network functions the current load value to determine whether the load value exceeds the pre-defined load threshold, and if yes
notifying, by the respective network function the at least one NRF and, by the at least one NRF the visualization application thereof, and
notifying by the visualization application a predetermined entity thereof.

It should be noted that a network resource threshold is preferably given in percent. For example, the network resource is a storage and the pre-defined storage threshold is set to 50%. This means if, for example, a specific network function requires for its application a storage capacity of 1Tbyte, which is pre-configured, the utilization of the storage exceeds the storage threshold of 50% if more than 500GByte are currently used by the storage of the respective network function.

Further, it should be noted that preferably the at least one network resources, e.g. a storage capacity and/or a CPU computing performance, and/or the load are pre-configured with respect to each network function and also the network resource thresholds are pre-defined during an orchestration or initialization phase.

It should be noted that the 5G mobile network, in particular if implemented as a 5G SBA network supports 5G network slicing. This is a network architecture that enables the multiplexing of virtualized and independent logical networks on the same physical network infrastructure. Each network slice is preferably tailored to fulfill diverse requirements requested by a particular network application or network service.

Therefore, the 5G mobile network can preferably be subdivided into at least a first logical network, i.e. a first network slice, and a second logical network, i.e. a second network slice, wherein a unique logical network identifier is assigned to each of the first and second logical network, wherein the first plurality of network functions are assigned to the first logical network, wherein a second plurality of network functions are implemented within the 5G mobile network, the second plurality of network functions being assigned to the second logical network and being configured to support a second predefined network service of the implemented 5G mobile network, wherein to each of the second plurality of network functions a network function profile is assigned, wherein the network function profile of each of the second plurality of network functions includes multiple network function related information elements. The step a) comprises the step of registering each of the second plurality of network functions at the at least one NRF by transmitting a register request message including the network function profile from each network function of the second plurality of network function to the at least one NRF and storing the received network function profile in the data storage; wherein
step b) comprises the step of transmitting a request message from the visualization application to the at least one NRF for obtaining the network function profile of each of the second plurality of network functions stored in the data storage; wherein
step c) comprises the step of transmitting in response to the request message the stored network function profiles of each of the second plurality of network functions from the at least one NRF to the visualization application; wherein
step d) comprises the step of generating, by the visualization application, in dependence of the multiple network function related information elements included in the network function profile of each of the second plurality of network functions a second visual representation of the second plurality of network functions; and wherein
step e) comprises the step of providing by the visualization application the second visual representation generated at step d) for outputting the visual representation on a display.

In order to keep the second visualization representation up to date of any changes regarding each of the second plurality of NFs, the method preferably comprises the steps:
if at least one of the network function related information elements of a network function profile of any one of the second plurality of network functions is changed, then f2) transmitting by that network function an update request message including the changed network function profile with the at least one changed network function related information element to the at least one NRF and updating the respective network function profile currently stored in the data storage in dependence of the changed network function profile;
g2) transmitting the respective updated network function profile from the at least one NRF to the visualization application; and
h2) updating, by the visualization application, the second visual representation generated in step d) in dependence of the received updated network function profile; and
repeating steps f2) to h2) whenever at least one of the network function related
information elements of a network function profile of any one of the second plurality of network functions is changed.

The process of updating the second visualization representation can be controlled by the visualization application, which can subscribe at the NRF at least one event which defines a change of an NF related information element included in an NF profile, about which the NRF shall notify the visualization application. In this case, the method preferably comprises the steps:
step g2) comprises the step of transmitting the respective updated network function profile from the at least one NRF to the visualization application only then, if the at least one changed network function related information element belongs to a predefined changing list of at least one network function related information element, which is known to the at least one NRF.

It is to be noted that, preferably according to 3GPP, each of the second plurality of network functions (NF) supports at least one predefined service-based interface depending on the type of the respective network function. A service-based interface of an NF is configured to communicate with a corresponding service-based interface of another network function.

Preferably, the network function profile of each of the second plurality of network functions may include as network function related information elements the type of the respective network function, an identifier assigned to the 5G mobile network, and/or the status of the respective network function and/or a uniform resource identifier, URI, of the respective network function, which includes the location of a data center, where the respective network function is implemented, and/or at least one supported service-based interface.

Preferably, step d) comprises the following steps:
creating for each of the second plurality of network functions a graphical element, wherein at least one of the network function related information elements included in the network function profile of each of the second plurality of network functions can be depicted within the graphical element of the respective network function, depicting each of the created graphical element within the second visual representation, and connecting via graphical links those graphical elements which represent network functions of the second plurality of network functions which support the same service-based interface.

The information of which service-based interface is supported by a respective NF, in particular of each of the second plurality of network functions (NF), is known to the visualization application. To get this information, the network function profile of each of the first plurality of network functions may include as a network function related information element the at least one service-based interface supported by the respective NF. Alternatively, the information of which service-based interface is supported by a respective NF can be provided to the visualization application during an initialization phase, e.g. by transmitting this information by an orchestrator via a computing device to the visualization application.

In order to provide a security measurement, the network function profile of each of the second plurality of network functions includes as further network function related information elements at least one network resource required for the respective network function, a utilization value of the at least one network resource and/or a load of the respective NF, the method further comprising the steps:
i) assigning to the at least one network resource a pre-defined utilization threshold and/or to the load a pre-defined load threshold, providing each of the pre-defined utilization threshold and/or the load threshold for the visualization application, checking, by the visualization application, each received network function profile to determine whether the utilization value of at least one network resource included in the respective the network function profile exceeds the respective pre-defined utilization threshold and/or whether the load exceeds the pre-defined load threshold, and if yes notifying, by the visualization application , a predetermined entity thereof, or
ii) assigning to at least one network resource a pre-defined utilization threshold and/or to the load a pre-defined load threshold,

providing each of the pre-defined utilization threshold and/or the load threshold for the visualization application,
transmitting the pre-defined utilization threshold of the at least one network resource and/or the load threshold from the visualization application to the at least one NRF,
transmitting the pre-defined utilization threshold of the at least one network resource and/or the load threshold to respective ones of the second plurality of network functions,
checking, by each of the network functions of the second plurality of network functions the current network resource utilization of the at least one network resource required by the respective network function to determine whether the utilization value of the at least one network resource required by the respective network function exceeds the respective pre-defined utilization threshold and/or checking by each of the network functions of the second plurality of network functions the current load to determine whether the load value exceeds the pre-defined load threshold, and if yes notifying, by the respective network function, the at least one NRF and, by the at least one NRF, the visualization application thereof, and
notifying by the visualization application a predetermined entity thereof.

### Brief Description of the Drawings

Figure 1 shows a schematic block diagram of an exemplary 5G mobile network using a Service-based Architecture, SBA, and a visualization application running on a cloud-based computing system connected to different NRFs.
Figure 2 shows an exemplary registration process of an NF instance at an NRF.
Figure 3 shows an exemplary process of updating an NF profile at the NRF.
Figure 4 shows an exemplary process of deregistering an NF profile at the NRF.
Figure 5 shows as an exemplary logic network topology two visual representations of a first and second network slice depicted on a display.
Figure 6 shows as a further exemplary logic network topology two visual representations of a first and second network slice depicted on a display.
Figure 7 shows an exemplary process of requesting, by the visualization application, the NRF to get all NF profiles of all registered NFs.
Figure 8 shows an exemplary process of subscribing, by the visualization application, at least one event, which defines a change of an NF related information element included in an NF profile, about which the NRF shall notify the visualization application.
Figure 9 shows an exemplary process of notifying the visualization application by the NRF of a changed NF profile.
Figure 10 shows an exemplary process of requesting by the visualization application to remove an already subscribed event at the NRF.

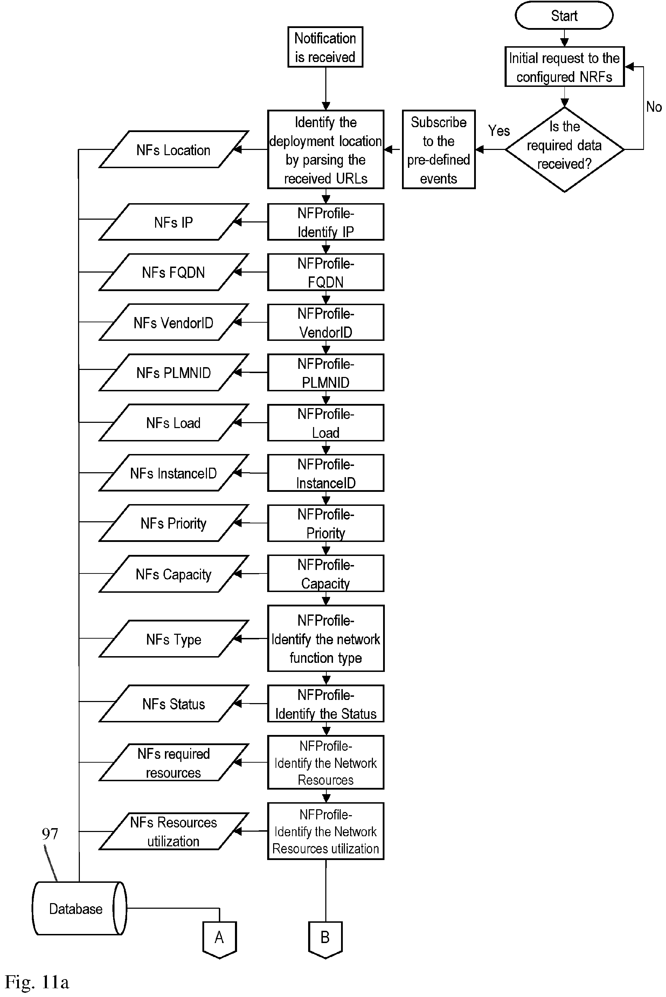

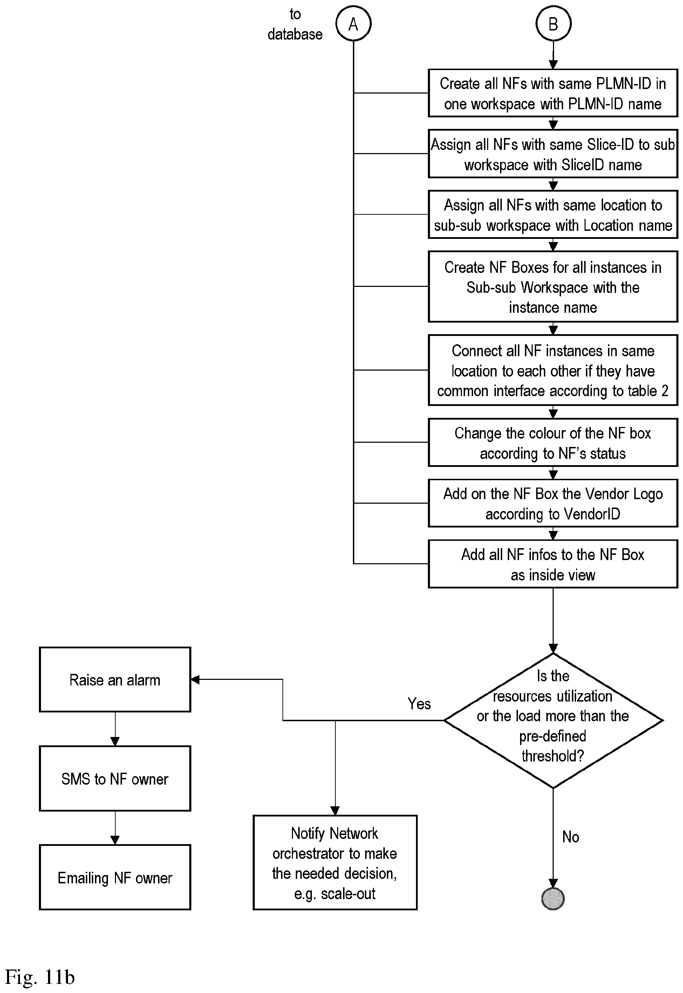

Figure 11 shows an exemplary flow chart of actions performed by the visualization application.
Figure 12 shows an exemplary logical topology tree

### Detailed Description of Preferred Embodiments of the Invention

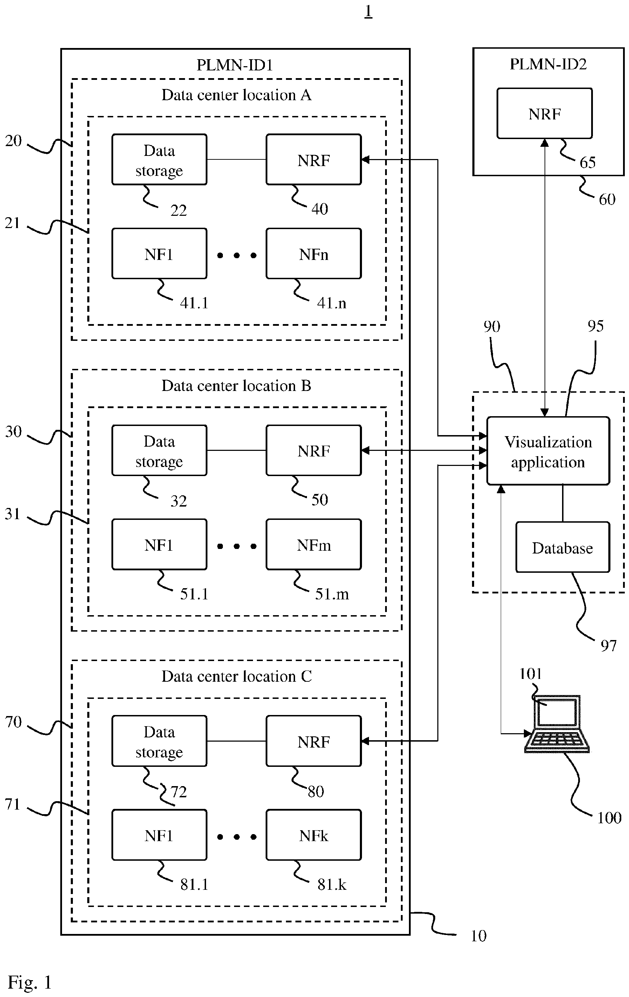

Figure 1 shows as a schematic block diagram of a mobile communication system 1, which comprises in particular an exemplary Service-based Architecture, SBA, implemented in an exemplary 5G mobile network 10 and a visualization application 95 running on a cloud-based computing system 90 which comprises a database 97. The visualization application 95 is connectable to at least one network Repository Function, NRF, for example to a NRF 40 located in a data center 20 at location A. It should be noted that the visualization application 95 and the cloud-based computing system 90, respectively, can be connected to NRFs implemented in different locations or data centers, which in turn can belong to different 5G mobile networks. In the exemplary system 1 the SBA of the 5G mobile network 10 comprises two further data centers, namely a data center 30 at location B and a data center 70 at location C. Data center 20 comprises a computing system 21 on which NRF 40 can be executed., data center 30 comprises a computing system 31on which a NRF 50 can be executed and data center 70 comprises a computing system 71 on which a NRF 80 can be executed . It is to be noted that the visualization application can alternatively run on each of the computing systems 21, 31 or 71.

In dependence of the implementation, the visualization application 95 and the cloud-based computing system 90, respectively, can be connected also to the NRFs 50 and 80. Preferably, each of the computing systems 20, 30 and 70 comprises multiple connectable computing devices (not shown) and at least one data storage 22, 32 and 72 respectively, wherein the data storages 22, 32, 72 are configured to store Network Function, NF, profiles received from different Network functions . Each of the data storages may be implemented as a database. For example, the 5G mobile network 10 can be implemented as a 5G standardized Public Land Mobile Network, PLMN, wherein an identifier ID1 can be assigned to the PLMN 10 indicating an operator of PLMN 10.

Only for the sake of completeness, a further SBA 60 of a second exemplary 5G mobile network 60 is schematically depicted in Figure 1. The SBA 60 includes inter alia a NRF 65, which can be connected to the visualization application 95 as well. In a similar way, the second 5G mobile network 60 can be implemented as a 5G standardized PLMN, wherein a second ID2 can be assigned to the PLMN indicating another network operator.

The visualization application 95 and each of the NRFs 40, 50, 80 and 65 can comprise a communication interface, which implements preferably a HTTP-based application programming interface, API, protocol, e.g. the Representational State Transfer, REST, API protocol to communicate with each other.

It should be noted that the visualization application 95 is preferably configured to get the predefined NF profiles of each NF registered on the respective NRF 40 and/or 50 and/or 65 and/or 80 and to generate at least one visual representation of the logical network topology of the SBA of the 5G network 10 and/or the logical network topology of the SBA of the 5G network 60, if available. It should be noted that the terms network function, NF, or Network function instance, NF instance, are used as synonyms.

In the following only the 5G SBA of PLMN 10 is illustrated in more detail. However, the 5G SBA of PLMN 60 can be implemented in a similar way.

It should be noted that it is known to a person skilled in the art as to how to implement a 5G standardized PLMN. Therefore, an already implemented PLMN 10 is used as the basis for the following illustration.

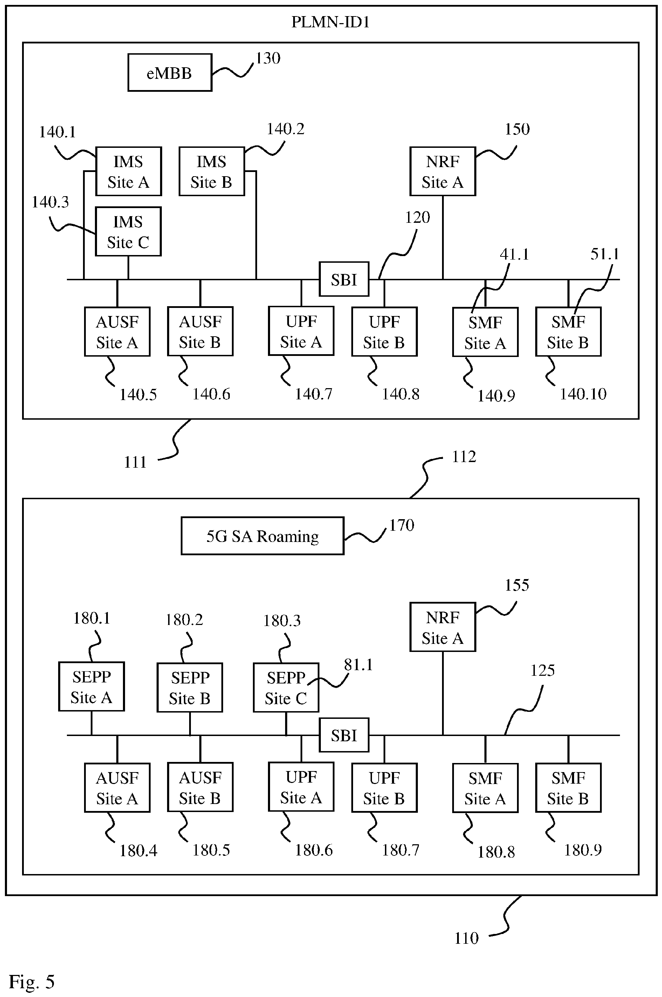

Now it is assumed that a 5G network slicing has been used within the PLMN 10 which enables the multiplexing of independent logical networks on the same physical network infrastructure. Therefore, the PLMN 10 has been subdivided into two logical networks, i.e. in a first network slice 130 and in a second network slice 170 each of which shall support a predefined network service or network application. For example, the first network slice 130 supports an enhanced Mobile Broadband, eMBB, service, whereas network slice 170 supports a 5G Stand Alone Roaming service, as shown for example in figure 5. Figure 5 depicts two visual representations 111 and 112 of the logical network topology of network slice 130 and 170, respectively, as will be illustrated below.

As shown in figure 5, network slice 130 comprises a first plurality of network functions, for example three IP Multimedia Subsystems, IMS, located in locations or deployment sides A, B and C, respectively, as shown in boxes 140.1-140.3, two network functions of type "AUSF" (Authentication Server Function) located in locations or deployment sides A, B as shown in boxes 140.5 and 140.6, two network functions of type "UPF" (User Plane Function) located in locations or deployment sides A, B as shown in boxes 140.7 and 140.8, two network functions of type "SMF" (Session Management Function) located in locations or deployment sides A, B as shown in boxes 140.9 and 140.10 and a NRF as shown in box 150.

Some of these network functions of network slice 130 are running on the computing system 21 located in the data center 20 and having the reference numbers 41.1 to 41.n and some of these network functions of network slice 130 are running on the computing system 31 located in the data center 30 of the PLMN 10 and having the reference numbers 51.1 to 51.m. For example, the network function 41.1, which is of the type "SMF" is depicted in box 140.9 of figure 5, wherein network function 51.1, which is of type "SMF is depicted in box 140.10 of figure 5. The IMS shown in box 140.3 is running on the computing system 71 located in the data center 70 of the PLMN 10 and having the reference number 81.1, for example. The NRF 40 shown in box 150 is running on the computing system 21 located in the data center 20 and having the reference number 40.

As further shown in figure 5, network slice 170 comprises a second plurality of network functions, for example three network functions of type "SEPP" (Security Edge Protection Proxy) located in locations or deployment sides A, B and C, respectively, as shown in boxes 180.1-180.3, two network functions of type "AUSF" (Authentication Server Function) located in locations or deployment sides A, B as shown in boxes 180.4 and 180.5, two network functions of type "UPF" (User Plane Function) located in locations or deployment sides A, B as shown in boxes 180.6 and 180.7, two network functions of type "SMF" (Session Management Function) located in locations or deployment sides A, B as shown in boxes 180.8 and 180.9 and a NRF as shown in box 155.

Some of these network functions of network slice 170 are running on the computing system 21 located in the data center 20 and having the reference numbers 41.1 to 41.n and some of these network functions of network slice 130 are running on the computing system 31 located in the data center 30 of the PLMN 10 and having the reference numbers 51.1 to 51.m. For example, the network function 41.1, which is of the type "SMF" is depicted in box 140.9 of figure 5, wherein network function 51.1, which is of type "SMF is depicted in box 140.10 of figure 5. The NRF 40 shown in box 150 is running on the computing system 21 located in the data center 20 and having the reference numbers 40.

It should be noted that different network slices, e.g. 130 and 170 can share one or more NFs and a common NRF as shown in figure 5.

Only for the sake of simplicity it is assumed that the NRF 40 located in data center 20 at location A is responsible for both network slices 130 and 170. With other words: The NRFs 50 and 70 of PLMN 20 can be deactivated or be omitted with respect to the exemplary described scenario.

It should be noted that predefined Network Functions which are supported in a NRF, e.g. in NRF 40, are defined in the 3GPP standard.

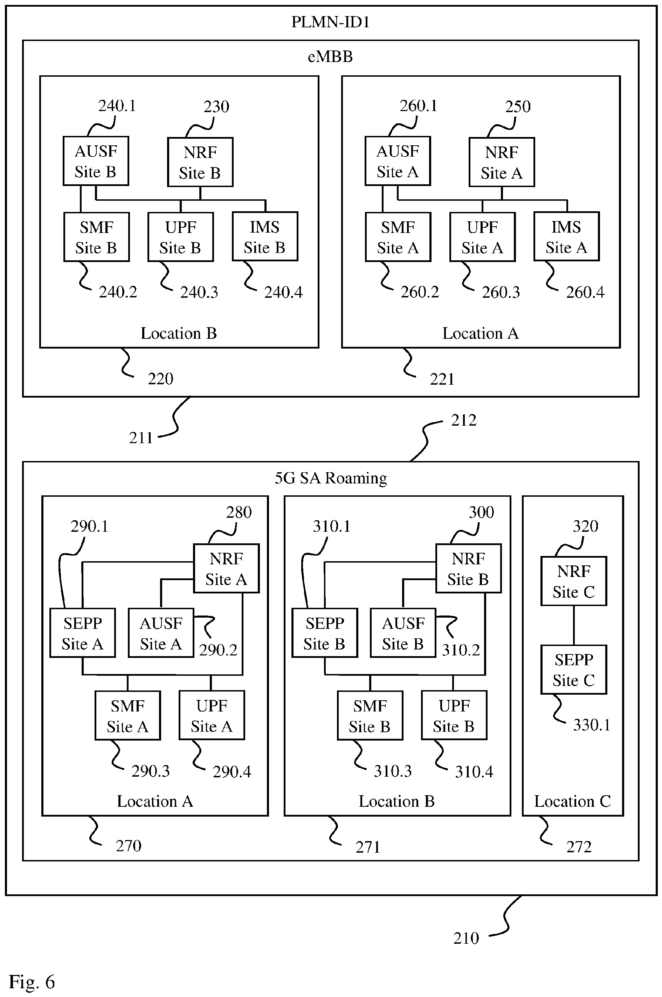

The following list only comprises some types of standardized Network Functions, which are deployed in the exemplary network slices 130 and 170 as shown in figures 5 and 6.
IMS IP Multimedia Subsystem
AMF Access and Mobility Management Function
AUSF Authentication Server Function
UPF User Plane Function
SMF Session Management Function
SEPP Security Edge Protection Proxy

It is further assumed that an individual NF profile has been configured and assigned to each of the network functions defining the first and second slice 130, 170.

According to the 3GPP standard an NF profile send to the NRF 40 preferably comprises at least some of the following NF related information elements:
- NF Type; the type of NF
- Slice ID
- NF InstanceID;
- NF Status
- NF FQDN (Full Quality Domain Name)
- NF IPv4/IPv6; IP address of the NF
- Priority
- Capacity; Static capacity information in the range of 0-65535, expressed as a weight relative to other NF instances of the same type;
- Load; Dynamic load information, ranged from 0 to 100, indicates the current load percentage of the NF
- PLMN-ID; the PLMN of the NF
- Supported features
- Vendor-ID

Furthermore, an NF profile preferably includes the following NF related information elements:
- Network Resources (e.g. central processing unit, CPU; Storge; Networking) required by an NF
- Network Resources utilization [CPU%, Storge%, Networking%)

These NF related information elements are described for example in the Technical Specification 3GPP TS 29.510 version 15.1.0 Release 15.

It should be noted, that a NF InstanceID is preferably included in each NF profile.

The NF related information element "Priority" is used for NF selection, if at least two NFs of the same type are used within the same network slice and the same 5G network, wherein the NF instance with the highest priority is used first.

AN NF status can be one of the following predefined states as defined by 3GPP: REGISTERED, NOT REGISTERED, SUSPENDED, UNDISCOVERABLE or CANARY_RELEASE.

AN NF FQDN is a uniform resource identifier, URI, of an NF, which shall include the location of a data center, the NF InstanceID, the NF type and the address of the NF.

The vendor ID may comprise the vendor's number according to the Internet Assigning Numbers Authority (IANA).

It is to be noted that, preferably according to 3GPP standard, a predefined network function (NF) supports at least one predefined service-based interface depending on the type of the respective network function

Preferably, in dependence of the implementation of the 5G SBI architecture of a PLMN, such as the PLMN 10, at least some of the following NF information can additionally be delivered from the NRF 40 to the visualization application 95 and the computing system 90, respectively, which reflects all registered NFs within the 5G SBI architecture of a

PLMN, such as the PLMN 10.
- AmfInfo; (AMF, Access and Mobility Management Function)
- udmInfo; (UDM, Unified Data Management)
- udrInfo; (UDR, Unified Data Repository)
- ausfInfo; (AUSF, Authentication Server Function)
- smfInfo; (SMF, Short Message Management Function)
- upfInfo; (UPF, User Plane Function)
- pcfInfo; (PCF, Policy Control Function)
- chfInfo; (CHFCharging Function)
- nefInfo; (NEF, Network Exposure Function)
- hssInfo; (HSS, Home Subscriber Server)
- seppInfo; (SEPP; Security Edge Protection Proxy)
- Nssaafinfo, (NSSAA, Network Slice-Specific Authentication and Authorization)
- Smsfinfo; (SMSF, Session Management Service Function)
- Mrfinfo; (MRF, Media Resource Function)

More information about the NFInfo can be found under the URL https://forge.3gpp.org/rep/all/5G_APIs/-/raw/REL-19/TS29510_Nnrf_NFManagement.yaml

Only for the sake of simplicity the process of configuring an NF profile is illustrated with respect to a single NF, for example NF 41.1 (see figure 1) implemented in location A and visually depicted in the graphical NF box 140.9 of figure 5.

The NF profile of the NF 41.1 may comprise the following NF related information elements:
- NF Type; SMF
- NF InstanceID, 1
- Slice ID, number or name, e.g. eMBB
- NF Status, registered
- NF FQDN, includes the location A of data center 20 where the NF is implemented,
- NF IPv4/IPv6; IP address of NF 41.1 (SMF)
- Capacity; Static capacity information in the range of 0-65535, expressed as a weight relative to other NF instances of the same type;
- Load; It is a dynamic load information, ranged from 0 to 100, which indicates the current load percentage of the NF
- PLMN-ID; e.g. PLMNID1 (reference number 10 shown in figure 1)
- Supported features
- Vendor-ID of SMF
- Network Resources [e.g. central processing unit, CPU; Storge; Networking] required by the NF SMF
- Network Resources utilization [CPU%, Storge%, Networking%) as measured by the NF SMF

It should be noted that for example at least some of the following NF related information elements included should be known to the visualization application 95 to generate a visual representation of a logical network topology of the PLMN- ID1.
- Deployment Site or Datacenter/location
- Status of the NF (Network Function)
- Connections defined by common interfaces with one or more other network functions
- Slice ID (e.g. eMBB, Gaming, 5G Campus, MVNO, 5G SA ROAMING...)
- Traffic handling Priority
- Required network resources (e.g. CPU, storage, networking) for the NF
- NF resource utilization (in percent)
- Capacity
- Load
- IPs
- FQDN
- PLMN-ID which defines the operator of the respective PLMN

Each NF profile of the further NF required by the first and second network slices 130 and 170 are configured in a similar way. In particular, the NF profile of each of the NFs which define slice 130 and 170, respectively, may include the respective NF type, as a slice ID a number, e.g. 1 or 2, an NF FQDN, which includes the location of the data center, where the respective NF is implemented, a Dynamic load information, ranged from 0 to 100, which indicates the current load percentage of the NF, the network resources required by the respective NF and the network resources utilization measured by the respective NF. It should be noted that a mapping table can be used by the visualization application 95, wherein the table maps the slice number to the respective slice name. For example, slice ID 001 is mapped to eMBB and slice ID is mapped to 5G SA ROAMING. The result of such a mapping is shown in figures 5 and 6. In other words:
i) A first plurality of network functions is implemented within the public land mobile network, PLMN 10, wherein the first plurality of network functions are assigned to the first logical network 130 and configured to support a first predefined network service of the implemented PLMN, e.g. an eMBB service. As mentioned to each of the first plurality of network functions a network function profile is assigned, wherein the network function profile of each of the first plurality of network functions includes multiple network function related information elements and
ii) a second plurality of network functions are implemented within the public land mobile network, PLMN 10, wherein the second plurality of network functions are assigned to the second logical network 170 and configured to support a second predefined network service of the implemented PLMN, e.g. a 5G SA Roaming service. AS mentioned to each of the second plurality of network functions a network function profile is assigned, wherein the network function profile of each of the second plurality of network functions includes multiple network function related information elements.

In addition, a list can be provided to the visualization application 95, which includes for example for each NF type used in slices 130 and 170 respective owner contact information, which may comprise the NF type, the owner's name, the owner's phone number and the owner's email. As will be explained below, the owner's phone number or email can be used by the visualization application 95 to inform the owner of the respective NF on pre-defined events, e.g. if a pre-defined resource utilization threshold is exceeded. The mapping table and the list can be stored on the database 97 of the computing system 90, wherein the visualization application 95 is configured to get access to the mapping table and the list information.

Next each of the NFs used by the slices 130 and 170 are registered on the NRF 40. Therefore, each of the NFs assigned to the first network slice 130 and each of the NFs assigned to the second network slice 170 transmits a register request message including its the network function profile to at least one NRF, in this example to NRF 40, wherein the NRF 40 causes the computing system 21 to store each received network function profile in the data storage 22.

Figure 2 illustrates an exemplary 5G standardized registration process with respect to the NF 41.1 of the type "SMF" which is located at location A. In this case the NF 41.1. operates as a consumer and sends a Nnrf NFManagement-NRFRegister message including the NF profile to the NFR 40, wherein Nnrf is the name of the interface of the NRF 40 known to each NF.

It is to be noted that for example, a Service Based Interface is implemented in each NF which is used in slices 130 and 170 and in the NRF 40 to enable a communication between the NFs and the NRF 40.

At the end of the registration process the NF profiles of the NFs implementing the first and second slice 130, 170 are stored on the data storage 22.

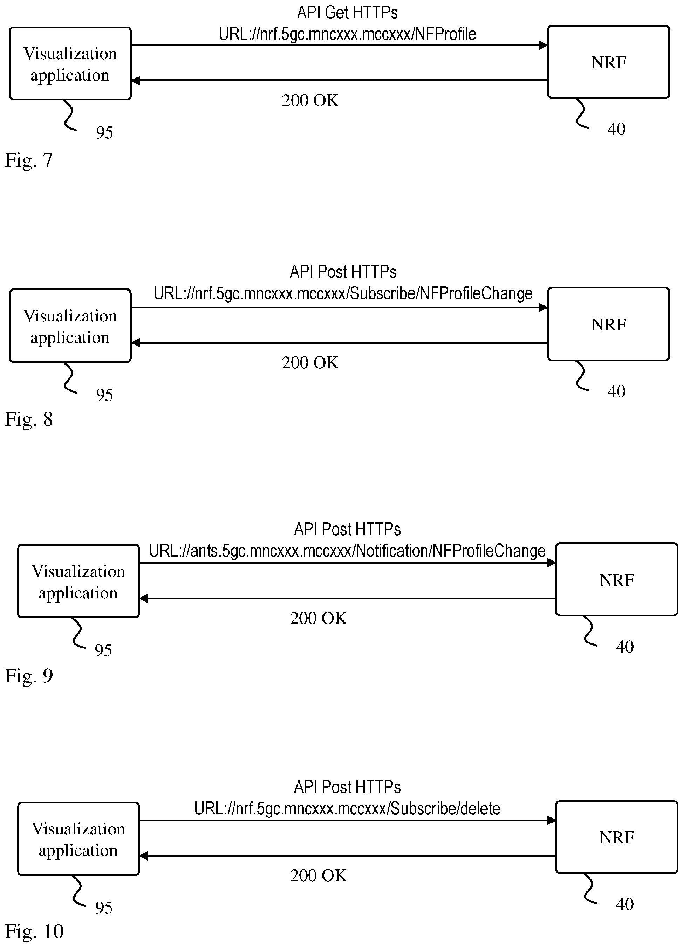

Next, the visualization application is configured to transmit a request message to at least one NRF, in the present case to NRF 40 for obtaining the network function profile of each of the first plurality of network functions implementing slice 130 and the network function profile of each of the second plurality of network functions implementing slice 170, which are stored in the data storage 22. Therefore, the NRF 40 and the visualization application 95 comprise each a communication interface which for example implements a HTTP-based application programming interface, API, protocol, such as the known Rest-API protocol. Next, in response to the request message the stored network function profiles are transmitted from the at least one NRF, in the present case from NRF 40, to the visualization application 95. It is to be noted that all or at least some of the NF related information elements included in an NF profile can be transmitted from the NRF 40 to visualization application 95. The NF related information elements to be transmitted from NRF 40 to the visualization application 95 can be selected by the visualization application 95. An exemplary API-based message exchange between the visualization application 95 and the NRF 40 in order to get the NF profiles of the respective NFs is shown in figure 7. In the 200 OK message the NRF 40 delivers the required NF profiles.

To keep the visualization application 95 up to date and informed of any changes with respect to slices 130 and 170 and their NFs a so-called subscription process can be executed. For example, an operator of the visualization application 95 which uses for example a computing device 100 can define one or more events, wherein each event represents an NF related information element of an NF profile which shall be updated if changed. For example, at least one of the following events can be subscribed:
- Status Change
- Traffic handling Priority change
- Slice ID change
- Required network resources change
- network Resources utilization more than a pre-defined threshold
- Supported Features change
- NF IPv4/IPv6 change
- Priority change
- Capacity change
- Load change more than a pre-defined threshold

It is assumed that all events are transmitted via the computing device 100 to the visualization application 95 using the URL of the visualization application which is known to the computing device 100 and then forwarding the events from the visualization application 95 to the NRF 40. An exemplary API-based message exchange for transmitting one or more of the events from the visualization application 95 to the NRF 40 is shown in figure 8.

It is assumed that each of the NFs of the first and second slices 130 and 170 is transmitting its NF profile to the NRF 40 once one or more of the NF related information elements included in the NF profile have changed. Then an updated NF profile is transmitted from the respective NF to the NRF. An exemplary message exchange for transmitting an updated NF profile from the NF 41.1 to the NRF 40 is shown in figure 3.

Only for completeness, figure 4 shows a message exchange between the NF 41.1 and the NRF 40 to deregister an NF profile and the respective NF and to mark the respective NF as unavailable on the NRF 40.

If any updated NF profile including at least one changed NF related information element is transmitted to and received at the NRF 40 the NRF 40 will forward the updated NF profile according to the subscribed events. With other words: A respective updated network function profile is transmitted from the NRF 40 to the visualization application 95 only then, if the at least one changed network function related information element included in the updated NF profile belongs to a predefined changing list of network function related information elements, i.e. to one of the subscribed events, which are known to the at least one NRF. An exemplary API-based message exchange between the NRF 40 and the visualization application 95 is shown in figure 9.

For the sake of completeness, figure 10 shows an exemplary API-based message exchange between the NRF 40 and the visualization application 95 to remove a subscription of already subscribed events. In this case the visualization application 95 is no more notified of any change of this specific event.

Furthermore, the owner or operator of the visualization application 95 preferably may pre-define thresholds (in percent) for the utilization of the network resources required by an NF, e.g. CPU, storage and networking, and/or the load of an NF. According to an exemplary implementation, these pre-defined thresholds can be transmitted via the computing device 100 to the visual application 95 and then forwarded to the NRF 40, which in turn transmits the predefined thresholds to the registered NFs. Each NF may be configured to monitor or check its current network resource utilization and/or load and to notify the NRF 40 if at least one of the current network resource utilizations and/or current load has exceeded the respective pre-defined threshold. In this case, the NRF 40 is configured to send a message to the visualization application 95 to inform it on the respective NF and the fact that a pre-defined threshold has been exceeded. In response to this message the visualization application 95 is configured to inform the owner of the respective NF - for example on his smartphone (not shown) using its phone number and/or on its computing device 100 using the email address - that a pre-defined threshold has been exceeded. In particular, the visualization application 95 is configured to inform the owner of the respective NF on each specific pre-defined threshold which has been exceeded.

According to an alternative exemplary implementation, these pre-defined thresholds can be transmitted via the computing device 100 to the visual application 95. The visualization application 95 is configured to check each received network function profile, which includes the current load of the NF and/or at least one network resource, i.e. the CPU and/or storage and/or networking, required for the respective network function and a utilization value of the at least one network resource to determine whether the utilization value of at least one network resource and/or the load, which are included in the respective the network function profile, exceed the respective pre-defined threshold. If yes, the visualization application 95 is configured to inform the owner of the respective NF - for example on his smartphone using its phone number and/or on its computing device 100 using the email address - that a pre-defined threshold has been exceeded. In particular, the visualization application 95 is configured to inform the owner of the respective NF and/or an orchestrator on each specific pre-defined threshold which has been exceeded.

Now, it is assumed that all NFs belonging to the first network slice 130 and all NFs belonging to the second network slice 170 are registered on the NRF 40 and their NF profiles are stored in the data storage 22. It is further assumed that the NF profile of each registered NF includes for example the PLMN ID1 (corresponds to reference number 10 shown in Fig. 1), the network slice ID of the slice the NF belongs to, i.e. a unique number, the location of the data center where the respective NF is running, the status of the respective NF, the FQDN of the respective NF and its IP address, the capacity of the respective NF the load, at least one feature supported by the respective NF, the Vendor-ID of the respective NF, at least one network Resource (e.g. central processing unit, CPU; Storge; Networking) required by the respective NF and the utilization [CPU%, Storge%, Networking%) of the at least one network resource.

Next, a request message is sent from the visualization application 95 to the NRF 40 for obtaining the network function profiles of each registered NF. In response to the request message the stored network function profiles are transmitted from the NRF 40 to the visualization application 95. The visualization application 95 generates in dependence of the multiple network function related information elements included in the network function profile of each of the registered network functions a first visual representation 111 of the network functions which belong to the first network slice 130 and a second visual representation 112 of the network functions which belong to the second network slice 170. The visualization application provides the visual representations for outputting the visual representations on a display, for example on the monitor 101 of the computing device 100 which for example operates in a pull operation to get the provided visual representations. The visual representations 111 and 112 according to a preferred implementation are shown in figure 5, wherein not all NF related information elements assigned to each of the NFs are depicted.

Figure 5 shows an exemplary visualization of a logical network topology comprising two network slices 130 and 170 which have been created by the visualization application 95 based on the NF profiles that the visualization application 95 received from NRF 40. Slice eMBB is a consumer slice where voice services are required. Therefore, IMS instances belong to this slice 130 but there are no SEPP instances which are required by the second slice 170.

Figure 5 shows a frame 110 also generated by the visualization application 95, which represents the PLMN 10. Within the frame 110 are depicted: The first visual representation 111 represented by a frame, which represents the first slice 130 carrying the specific name "eMBB", wherein graphical elements e.g. boxes 140.1 to 140.10 each showing the type of the NF which belongs to the first network slice 130 and a box 150 representing the NRF 40 are depicted within the first visual representation 111. Each box includes inter alia the location or site of the data center where the respective NF is implemented. It is to be noted that each NF related information element assigned to the respective NF can be shown within the respective box. According to the 5G standard the boxes 140.1 to 140.10 and 150 are connected via graphical links forming a Service Based Interface bus 120, over which the NFs and the NRF 40 communicate.

Within the frame 110 are further depicted: The second visual representation 112 represented by a frame, which represents the second network slice 170 carrying the specific name "5G SA ROAMIN", wherein graphical elements e.g. boxes 180.1 to 180.9 each showing the type of the NF which belongs to the second network slice 130 and a box 155 representing the NRF 40 are depicted within the second visual representation. Each box includes inter alia the location or site of the data center where the respective NF is implemented. It is to be noted that each NF related information element assigned to the respective NF can be shown within the respective box. According to the 5G standard the boxes 180.1 to 180.9 and 155 are connected via graphical links forming a Service Based Interface bus 120, over which the NFs and the NRF 40 communicate. The visualization shown in figure 5 can be output for example on the monitor 101 of the computing device 100 or any other computing device or system which has access to the visualization application 95.

It should be noted that according to 3GPP each NF type supports at least one predefined service-based interface.

Figure 6 shows an exemplary visualization of the logical network topology comprising two network slices 130 and 170 which have been created by the visualization application 95 based on the NF profiles that the visualization application 95 received from NRF 40. Figure 6 is based on the rule that if for example two different NF types support the same service-based interface and the NF Types belong to the same PLMN-ID and to same location then the visualization application 95 shall reflect the N-Based interface structure into the topology visualization. For example, the NF type "SMF", shown in box 290.3 supports the service-based interfaces N4, N7, N10 and N11, whereas the NF type "UPF" shown in box 290.4 supports the service-based interfaces N3, N4, N6 and N). Therefore, both NF types support the service-based interface N4 as a mutual supported interface. In this case both NF Types shall be connected over a N4 interface which may be graphical depicted by a respective link. In dependence of this rule the visualization application 95 may generate the visualization shown in figure 6.

Figure 6 shows a frame 210 also generated by the visualization application 95, which represents PLMN 10. Within frame 210 are depicted:
i) A first visual representation 211 represented by a frame, which represents the first slice 130 carrying the specific name "eMBB", wherein two frames 220 and 221 are depicted within the frame 211, wherein frame 220 represents the location B of data center 30 and frame 221 represents the location A of data center 20. Within frame 220 graphical elements e.g. boxes 240.1 to 240.4, each showing the type of the NF, which belongs to the first network slice 130 and to the location B, and a box 230 representing the NRF 50 are shown. Each box includes inter alia the location B or site of the data center where the respective NF is implemented. It is to be noted that each NF related information element assigned to the respective NF can be shown within the respective box. According to the specific rule those boxes of NF types which support the same service-based interface are connected via graphical links.
   Within frame 221 graphical elements e.g. boxes 260.1 to 260.4, each showing the type of the NF, which belongs to the first network slice 130 and to the location A, and a box 250 representing the NRF 40 are shown. Each box includes inter alia the location A or site of the data center where the respective NF is implemented. It is to be noted that each NF related information element assigned to the respective NF can be shown within the respective box. According to the specific rule those boxes of NF types which support the same service-based interface are connected via graphical links.
ii) A second visual representation 212 represented by a frame, which represents the second slice 170 carrying the specific name "5G SA ROAMING"", wherein three frames 270, 271 and 272 are depicted within the frame 212, wherein frame 270 represents the location A of data center 20 and frame 271 represents the location B of data center 30. Within frame 270 graphical elements e.g. boxes 290.1 to 290.4, each showing the type of the NF, which belongs to the second network slice 170 and to the location A, and a box 280 representing the NRF 40 are shown. Each box may include inter alia the location A or site of the data center 20 where the respective NF is implemented. It is to be noted that each NF related information element assigned to the respective NF can be shown within the respective box. According to the specific rule those boxes of NF types which support the same service-based interface are connected via graphical links.

Within frame 271 graphical elements e.g. boxes 310.1 to 310.4, each showing the type of the NF, which belongs to the second network slice 170 and to the location B, and a box 300 representing the NRF 50 are shown. Each box includes inter alia the location B or site of the data center where the respective NF is implemented. It is to be noted that each NF related information element assigned to the respective NF can be shown within the respective box. According to the specific rule those boxes of NF types which support the same service-based interface are connected via graphical links.

Within frame 272 a graphical element e.g. box 330.1 to 310.4 showing the type SEPP of the NF, which belongs to the second network slice 170 and to the location C, and a box 320 representing the NRF 80 are shown. Each box includes inter alia the location C or site of the data center where the respective NF is implemented. It is to be noted that each NF related information element assigned to the respective NF can be shown within the respective box. According to the specific rule those boxes of NF types which support the same service-based interface are connected via graphical links.

The visualization shown in figure 6 can be output for example on the monitor 101 of the computing device 100 or any other computing device or system which has access to the visualization application 95.

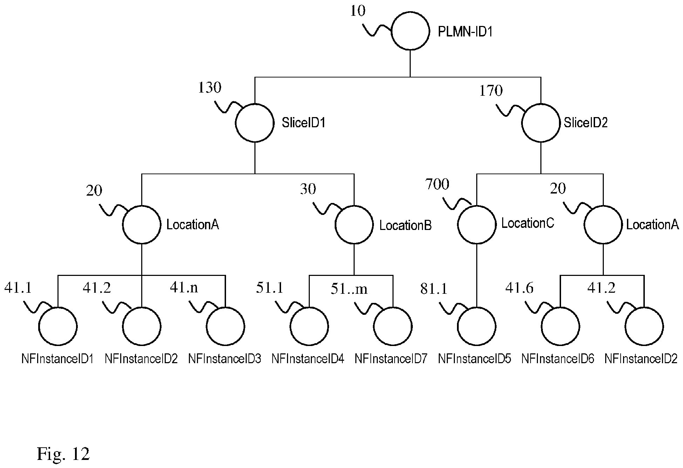

Now, an exemplary handling flow is illustrated in connection with figure 12, which is executed by the visualization application 95 and the computing system 90, respectively to visualize a logical network topology based on an implemented 5G SBA of the PLMN 10 and to inform the owner of an implemented NF if an anomaly, e.g. exceeding a predefined network resource utilization threshold, occurred with respect to the respective NF. It is to be noted that each NF profile, which also covers an updated NF profile, of each NF received by the visualization application 95 can be processed in the exemplary manner as described now.

According to an exemplary implementation the visualization application 95 starts transmitting an initial request message to at least one NRF, in the present case to the NRF 40 to get the NF profiles of each registered NF. In response to the request message the NRF 40 sends the NF profiles of the registered NFs, stored in the data storage 22 to the visualization application 95. This message exchange has been described above in connection with figure 7.

If all requested NF profiles are received the visualization application 95 subscribes at least one event on the NRF 40, as described above in connection with figure 8. Each event represents an NF related information element of an NF profile which causes the NRF 40 to transmit a changed NF profile received from the respective NF if the changed profile includes a changed NF related information element defined by the at least one event.

Now each received NF profile is processed by the visualization application 95 by analyzing each included NF related information element as follows:
Identifying the deployment or location of the data center where the respective NF, for example the NF type SMF 41.1 is implemented by parsing the URL included in the received NF profile. For example the URL of the NF type "SMF" can be parsed as follows:
Instance ID.data center location.NF type.5gc.mnc.mcc, where the data center location is in the present case location A, e.g. Berlin, and the type is SMF. The detected location of the respective NF is then stored in the database 97 of the computing system.

If included in the respective NF profile the IP address of the respective NF, the FQDN, the vendor ID of the respective NF, the ID of the PLMN where the NF is implemented, for example ID1 for the PLMN 10, the load of the respective NF, the Instance ID of the respective NF, the priority of the respective NF, the capacity of the respective NF, the NF type of the respective NF, e.g. SMF, the status of the respective NF, the network resources required by of the respective NF, the network resource utilization in percent, are determined and also stored in the database 97.

Now the visualization application 95 creates or collects in dependence of the stored information all NFs with the same PLMN ID, e.g. the PLMN ID1 (corresponding to reference number 10 shown in figure1), and creates a frame, e.g. frame 210 carrying the PLMN ID1 as shown in figure 6.

Next, the visualization application 95 collects all NFs having the same slice ID. For example, all NFs assigned to slice "eMBB" and all NFs assigned to "5G SA ROAMING" are collected and a frame is created for each slice, for example two frames 211 and 212 for two slices as shown in figure 6. The respective slice ID or name is then depicted in each frame 211 and 212.

Next, the visualization application 95 collects all NFs which are implemented in the same location, for example in location A or B. For example, all NFs assigned to location A and all NFs assigned to location B are collected and a frame is created for each location, for example two frames 220 and 221 for two locations A and B as shown in figure 6. The respective location name is then depicted in each frame 220 and 221.

Next, the visualization application 95 creates for each received and analyzed NF profile assigned to a specific NF a graphical element like a box with the respective NF type, wherein each box is assigned to the respective PLMN, slice and location, the respective NF belongs.

According to an exemplary configuration, the visualization application 95 connects the NFs in the same location to each other if they support, as mentioned above, the same service-based interface. A match of a common used service-based interface between different NF types can be determined by the visualization application 95 by analyzing the received NF profiles. Alternatively, a respective table including all NFs and a list for each NF which includes the supported service-based interfaces can be configured and provided by the computing system 90 to the visualization application 95.

In addition, the visualization application 95 can assign a specific color to the boxes in dependence of the status of the respective NF.

Furthermore, the vendor ID and all other NF related information elements included in an NF profile can be shown for example inside of a respective box.

The exemplary result of processing and analyzing each received NF profile by the visualization application 95 is shown for example in figure 6.

According to a preferred implementation the visualization application 95 is configured to check or determine whether the current utilization of at least one network resource required by the respective NF and/or its load exceeds a pre-defined threshold. As explained in detail already above there are preferably two ways to do this.

In the first alternative the pre-defined thresholds are transmitted via the visualization application 95 and the respective NRFs, e.g. NRF 40 to the respective NFs. In this case each NF monitors the load and respective network resource utilization and informs the NRF 40, where they are registered, if at least one pre-defined threshold is exceeded. This information is forwarded from the NRF 40 to the visualization application 95, which then notifies the owner of the respective NF and/or an orchestrator thereof for example by sending a respective SMS to its smartphone or an email.

In the second alternative the visualization application 95 itself monitors the current values of the resource utilization and/or load received in each NF profile to detect an exceeding of at least one of the pre-defined thresholds. If an exceeding of a pre-defined threshold is detected by the visualization application 95 it notifies the owner of the respective NF and/or the orchestrator thereof for example by sending a respective SMS to its smartphone or an email.

It should be noted that preferably the load and/or the at least one network resource, e.g. a storage capacity and/or a CPU computing performance and/or a networking performance are pre-configured with respect to each network function as well as the network resource thresholds and/or load threshold are pre-defined during an orchestration or initialization phase. Moreover, the address of the visualization application 95 can be provided to the at one NRF 40, 50, 80, the address of the at least one NRF can be provided to the visualization application 95, the address of an operator and/or the address the owners of each NF can be provided to the visualization application 95, the address of at least one of the NRF can be provided to respective NFs which are to be registered at the respective NRF, and the addresses of NFs can be provided to the at least one NFR during the orchestration or initialization phase. In particular, the respective addresses may be input by an operator via a computing device at the respective instances.

Figure 12 shows an exemplary logical topology tree based on figures 1 and 6. Figure 12 shows in one plane the slices 130 and 170 which are implemented in the PLMN 10 forming the root node, in the next plane below the locations of data centers deployed in the respective slices and in the lowest plane the NF instances implemented in the respective locations.

## Claims

1. A method in particular for automated visualizing a logical network topology of an implemented fifth Generation, 5G, mobile network (10), wherein
at least one Network Function Repository Function, NRF, (40, 50, 80) and a first plurality of network functions, NF (41.1-41n; 51.1-51.n; 81.1-81.k) are implemented within the 5G mobile network (10), wherein the first plurality of network functions (41.1-41n; 51.1-51.n; 81.1-81.k) is configured to support a first predefined network service of the implemented 5G mobile network (10), wherein to each of the first plurality of network functions (41.1-41n; 51.1-51.n; 81.1-81.k) a network function profile is assigned, wherein the network function profile of each of the first plurality of network functions (41.1-41n; 51.1-51.n; 81.1-81.k) includes multiple network function related information elements, wherein a visualization application (95) is implemented, wherein the visualization application (95) and the at least one NRF (40, 50, 80) are configured to communicate with each other, the method comprising the steps:
a) registering each of the first plurality of network functions (41.1-41n; 51.1-51.n; 81.1-81.k) at the at least one NRF (40, 50, 80) by transmitting a register request message including the network function profile from each network function of the first plurality of network function (41.1-41n; 51.1-51.n; 81.1-81.k) to the at least one NRF (40, 50, 80) and storing the received network function profile in a data storage(22, 32, 72);
b) transmitting a request message from the visualization application (95) to the at least one NRF (40, 50, 80) for obtaining the network function profile of each of the first plurality of network functions (41.1-41n; 51.1-51.n; 81.1-81.k) stored in the data storage (22, 32, 72);
c) transmitting in response to the request message the stored network function profiles from the at least one NRF (40, 50, 80) to the visualization application (95);
d) generating, by the visualization application (95), in dependence of the multiple network function related information elements included in the network function profile of each of the first plurality of network functions (41.1-41n; 51.1-5 1.n; 81.1-81.k) a first visual representation 111; 211) of the first plurality of network functions (41.1-41n; 51.1-51.n; 81.1-81.k); and
e) providing by the visualization application (95) the first visual representation (111, 211) generated at step d) for outputting the visual representation on a display (101).

2. The method of claim 1, wherein
the 5G mobile network (10 is a standardized Public Land Mobile Network, PLMN according to a fifth Generation, 5G, standard defined by the third Generation Partnership Project, 3GPP.

3. The method of claim 1 or 2, wherein
the visualization application (95) and the at least one NRF (40, 50, 80) each implement a HTTP-based application programming interface, API, protocol to communicate with each other.

4. The method of any one of the preceding claims further comprises the steps:
if at least one of the network function related information elements of a network function profile of any one of the first plurality of network functions (41.1-41n; 51.1-51.n; 81.1-81.k) is changed, then
f1) transmitting by that network function an update request message including the changed network function profile with the at least one changed network function related information element to the at least one NRF (40, 50, 80) and updating the respective network function profile currently stored in the data storage (22, 32, 72) in dependence of the changed network function profile;
g1) transmitting the respective updated network function profile from the at least one NRF (40, 50, 80) to the visualization application (95); and
h1) updating, by the visualization application (95), the first visual representation (111, 211) generated in step d) in dependence of the received updated network function profile; and
repeating steps f1) to h1) whenever at least one of the network function related information elements of a network function profile of any one of the first plurality of network functions is changed.

5. The method of claim 4, wherein
step g1) comprises the step of transmitting the respective updated network function profile from the at least one NRF (40, 50, 80) to the visualization application (95) only then, if the at least one changed network function related information element belongs to a predefined changing list of at least one network function related information element, which is known to the at least one NRF (40, 50, 80) .

6. The method of claim 5, wherein
the changing list is transmitted from an operator's computing system (100 to the visualization application (95) and from the visualization application (95) to the at least one NRF (40, 50, 80).

7. The method of any one of the preceding claims, wherein
each of the first plurality of network functions (41.1-41n; 51.1-51.n; 81.1-81.k) supports at least one service-based interface, wherein
the network function profile of each of the first plurality of network functions (41.1-41n; 51.1-51.n; 81.1-81.k) includes as a network function related information element the type of the respective network function, a uniform resource identifier of the respective network function, which includes the location of a data center (20, 30, 70), where the respective network function is implemented, an identifier assigned to the 5G mobile network (10) and/or the status of the respective network function.

8. The method of claim 7, wherein
step d) comprises the following steps:
creating for each of the first plurality of network function a graphical element, wherein at least one of the network function related information elements included in the network function profile of each of the first plurality of network functions (41.1-41n; 51.1-51.n; 81.1-81.k) can be depicted within the graphical element of the respective network function, depicting each of the created graphical element within the first visual representation, and
connecting via graphical links those graphical elements which represent network functions supporting the same service-based interface.

9. The method of any one of the preceding claims, wherein
the network function profile of each of the first plurality of network functions includes further as a network function related information element at least one network resource required for the respective network function, a utilization value of the at least one network resource and/or a load, the method further comprising the steps:
assigning to at least one network resource a pre-defined utilization threshold and/or to the load a pre-defined load threshold,
providing each of the pre-defined utilization threshold and/or the load threshold for the visualization application,
checking, by the visualization application (95), each received network function profile to determine whether the utilization value of at least one network resource included in the respective network function profile exceeds the respective pre-defined utilization threshold and/or checking, by the visualization application (95), each received network function profile to determine whether the load value of the respective NF included in the respective network function profile exceeds the respective pre-defined load threshold, and if yes
notifying, by the visualization application , a predetermined entity (100) thereof.

10. The method of any one of the preceding claims, wherein
the network function profile of each of the first plurality of network functions includes as further network function related information elements at least one network resource required for the respective network function, a utilization value of the at least one network resource and/or the load of the respective NF, the method further comprising the steps:
assigning to the at least one network resource a pre-defined utilization threshold and/or to the load a load threshold,
providing each of the pre-defined utilization thresholds and/or the load threshold for the visualization application,
transmitting the pre-defined utilization threshold of the at least one network resource and/or the load threshold from the visualization application (95) to the at least one NRF (40, 50, 80),
transmitting the pre-defined utilization threshold of the at least one network resource and/or the load threshold to respective ones of the first plurality of network functions (41.1-41n; 51.1-51.n; 81.1-81.k),
checking, by each of the first plurality of network functions (41.1-41n; 51.1-51.n; 81.1-81.k) the current network resource utilization of the at least one network resource required by the respective network function and/or the load to determine whether the utilization value of the at least one network resource required by the respective network function exceeds the respective pre-defined utilization threshold and/or checking, by each of the first plurality of network functions (41.1-41n; 51.1-51.n; 81.1-81.k) the load to determine whether the load exceeds the pre-defined load threshold, and if yes
notifying, by the respective network function the at least one NRF (40, 50, 80) and, by the at least one NRF (40, 50, 80) the visualization application (95) thereof, and
notifying by the visualization application (95) a predetermined entity (100) thereof.

11. The method of any one of the preceding claims, wherein,
at least a first logical network (130) and a second logical network (170) are implemented within the 5G mobile network (10), wherein a unique logical network identifier is assigned to each of the first and second logical network (130, 170), wherein the first plurality of network functions are assigned to the first logical network (130), wherein
a second plurality of network functions (41.1-41n; 51.1-51.n; 81.1-81.k) are implemented within the 5G mobile network (10), the second plurality of network functions being assigned to the second logical network(170) and being configured to support a second predefined network service of the 5G mobile network (10), wherein to each of the second plurality of network functions a network function profile is assigned, wherein the network function profile of each of the second plurality of network functions includes multiple network function related information elements, wherein
step a) comprises the step of registering each of the second plurality of network functions at the at least one NRF (40, 50, 80) by transmitting a register request message including the network function profile from each network function of the second plurality of network function to the at least one NRF (40, 50, 80) and storing the received network function profile in the data storage (22, 32, 72); wherein
step b) comprises the step of transmitting a request message from the visualization application (95) to the at least one NRF (40, 50, 80) for obtaining the network function profile of each of the second plurality of network functions stored in the data storage; wherein
step c) comprises the step of transmitting in response to the request message the stored network function profiles of each of the second plurality of network functions from the at least one NRF (40, 50, 80) to the visualization application (95); wherein
step d) comprises the step of generating, by the visualization application (95), in dependence of the multiple network function related information elements included in the network function profile of each of the second plurality of network functions a second visual representation (112, 212) of the second plurality of network functions; and wherein
step e) comprises the step of providing by the visualization application (95) the second visual representation (112, 212) generated at step d) for outputting the visual representation on a display (101).

12. The method of claim 11 further comprises the steps:
if at least one of the network function related information elements of a network function profile of any one of the second plurality of network functions is changed, then
f2) transmitting by that network function an update request message including the changed network function profile with the at least one changed network function related information element to the at least one NRF (40, 50, 80) and updating the respective network function profile currently stored in the data storage (22, 32, 72) in dependence of the changed network function profile;
g2) transmitting the respective updated network function profile from the at least one NRF (40, 50, 80) to the visualization application (95); and
h2) updating, by the visualization application (95), the second visual representation generated in step d) in dependence of the received updated network function profile; and
repeating steps f2) to h2) whenever at least one of the network function related information elements of a network function profile of any one of the second plurality of network functions is changed.

13. The method of claim 14, wherein
step g2) comprises the step of transmitting the respective updated network function profile from the at least one NRF (40, 50, 80) to the visualization application (95) only then, if the at least one changed network function related information element belongs to a predefined changing list of at least one network function related information element, which is known to the at least one NRF (40, 50, 80).

14. The method of any one of the claims claim 11 to 13, wherein
each of the second plurality of network functions (41.1-41n; 51.1-51.n; 81.1-81.k) supports at least one service-based interface, wherein
step d) comprises the following steps:
creating for each of the second plurality of network functions a graphical element,
wherein at least one of the network function related information elements included in the network function profile of each of the second plurality of network functions can be depicted within the graphical element of the respective network function,
depicting each of the created graphical element within the second visual representation (112, 212), and
connecting via graphical links those graphical elements which represent network functions of the second plurality of network functions which support the same service-based interface.

15. The method of any one of the claims 11 to 14, wherein
the network function profile of each of the second plurality of network functions includes as further network function related information elements at least one network resource required for the respective network function, a utilization value of the at least one network resource and/or a load of the respective NF, the method further comprising the steps:
i) assigning to the at least one network resource a pre-defined utilization threshold and/or to the load a pre-defined load threshold,
providing each of the pre-defined utilization threshold and/or the load threshold for the visualization application (95),
checking, by the visualization application (95), each received network function profile to determine whether the utilization value of at least one network resource included in the respective the network function profile exceeds the respective pre-defined utilization threshold and/or checking, by the visualization application (95), each received network function profile to determine whether the load exceeds the pre-defined load threshold, and if yes
notifying, by the visualization application (95), a predetermined entity thereof, or
ii) assigning to at least one network resource a pre-defined utilization threshold and/or to the load a pre-defined load threshold,
providing each of the pre-defined utilization threshold and/or the load threshold for the visualization application (95),
transmitting the pre-defined utilization threshold of the at least one network resource and/or the load threshold from the visualization application to the at least one NRF,
transmitting the pre-defined utilization threshold of the at least one network resource and/or the load threshold to respective ones of the second plurality of network functions,
checking, by each of the network functions of the second plurality of network functions the current network resource utilization of the at least one network resource required by the respective network function to determine whether the utilization value of the at least one network resource required by the respective network function exceeds the respective pre-defined utilization threshold and/or checking, by each of the network functions of the second plurality of network functions, the load to determine whether the load exceeds the load threshold , and if yes
notifying by the respective network function the at least one NRF (40, 50, 80) and by the at least one NRF (40, 50, 80) the visualization application (95) thereof, and
notifying by the visualization application (95) a predetermined entity (100) thereof.
